# EUROPEAN PATENT APPLICATION

(11) **EP 4 576 647 A1**
(43) Date of publication of application: **25.06.2025**
(21) Application number: 23219480.3
(22) Date of filing: 21.12.2023
(51) Int. Cl.: H04L 9/00

(54) **METHOD AND SYSTEM FOR MULTIDIMENSIONAL BLOCKCHAIN MINING**

(71) Applicant: Unify Beteiligungsverwaltung GmbH & Co. KG, 81739 München (DE)
(72) Inventor: Grigoropoulos, Charalampos, 15234 Chalandri (GR); Tsiatsikas, Zisis, 55534 Thessaloniki (GR)
(74) Representative: Schaafhausen, Anne

(57) **Abstract**

The invention relates to a method and a system for multidimensional Blockchain mining. The method makes use of a purposely delay of the time frame of the block mining in order to use the information in the block at hand as a relay to route in specific targeted node elements. The delay, which is performed on the block mining, targets the reshaping (editing) process in the blockchain implemented in this solution. By delaying the mining, the number of blocks that is otherwise needed to be edited is limited. Additionally, a chain is obtained that is more solid with regards to its incident information contents. The technical advantage of this action is depicted in the search operations performed over the optimized chain once it is edited. The above changes result in lower usage of server resources giving the opportunity to handle more events with the same number of resources.

## Description

The present invention relates to a method and a system for multidimensional Blockchain mining. Such a method and such a system are particularly suited for emergency service environments but are not limited to these environments. The method and the system are also suited for any kind of system in which any type of transactions which are introduced by different nodes of the network are performed. Such networks may comprise financial networks, security networks, governmental networks etc.

The usage of blockchain and its capabilities are continuously increasing as technology innovates and becomes more and more complicated. Every day, there are new applications that demand the abilities and security offered by blockchain environments. The present invention aims to enhance the advantages of the blockchain by providing a mechanism to make data entering during block creation more efficient and data searching faster and easier.

In addition, in NG911/112 emergency environments (Next Generation 911/112 Emergency Environments), for example, the call routing functionality between different Public Safety Answering Points (PSAPs), is also being extended, which aims to collect calls targeting the same incident on the same PSAP server and, where possible, combine the relevant data in a single or at least neighboring block.

Therefore, the present invention is based on the object to provide a method and a corresponding system for multidimensional blockchain mining. In particular, the method and the corresponding system should be designed in such a way that an optimization of the blockchain structure (smaller chain with condensed information per incident) is achieved, further that the search operations in the blockchain can be carried out faster and easier and that the response time is reduced for example in order to dispatch emergency personnel more quickly in the event of emergencies. Furthermore, the resources of the network are to be conserved and used more effectively.

This object is solved by a method having the features according to claim 1, a system having the features of claim 12, a program element having the features of claim 14 and a computer-readable medium having the features of claim 15. Preferred embodiments of the invention are defined in the respective dependent claims.

According to the invention, a method for multidimensional blockchain mining is provided, the method comprising the steps of:
- deciding, by a first node in a blockchain-comprising network, to change a mining dimension of a block which is to be mined, thus delaying the block, upon detecting a trigger event from a second or any further node in the blockchain-comprising network;
- calculating, by the first node, a time period k for a delay in the mining dimension of the delayed block;
- initiating, by the first node, a timer with the calculated time period k to mine the delayed block;
- correlating, by the first node, one or more new incoming call with one or more incident already present in the delayed block;
- routing, by the first node, the one or more new incoming call to one of the second or any further node according to predefined standard routing rules, in case no correlation with one or more call already present in the delayed block is made;
- routing, by the first node, the one or more new incoming call to one of the second or any further node which is responsible for one or more call already present in the delayed block, in case one or more correlation with one or more call already present in the delayed block is made,
- Collecting, by the first node, one or more previous block of the blockchain which comprises one or more open incidence;
- correlating, by the first node, the one or more new incoming call to the one or more previous block of the blockchain which comprises one or more open incidence;
- editing, by the first node, the delayed block and/or the one or more previous block of the blockchain, in case one or more correlation between the one or more new incoming call and one or more open incident is made, and routing, by the first node, the one or more new incoming call to the node which is responsible for the one or more correlating open incident.

The invention is built over the fundamental idea of purposely altering the mining timeframe when specific events take place. In essence, it relies on this technical aspect to create different technical effects which optimize the blockchain structure (smaller chain with condensed information) and the search operations in the blockchain. In the sense of the invention, the term dimension or mining dimension is used to point the difference in the mining timeframe per block, which in essence transforms the way the blocks are populated in the chain. That is, each time a mining dimension alteration is triggered in the context of this invention, the population of blocks is paused to increase the mining timeframe of the specific block. So, if a decision is made to change the mining dimension of a block that is to be mined, this block is delayed and thus becomes a delayed block.

According to a preferred embodiment, the first node is an Emergency Service Routing Proxy, ESRP, a Public Safety Answering Point, PSAP, a Session Border Controller, SBC, a Border Control Function, BCF, a server and /or a media server; the second or any further node is an ESRP, PSAP, a Session Border Controller, SBC, a Border Control Function, BCF, a server and /or a media server; the block chain-comprising network is an emergency network, an Emergency Services IP Network, ESlnet, a financial network, a security network and/or a governmental network.

According to another preferred embodiment, the trigger event comprises a labeled data element, an open incident, a labeled or tagged call, a financial data transaction, a health data transaction and/or any type of transaction which is introduced by different nodes.

According to still another preferred embodiment, the change of the mining dimension further comprises the change from a standard preconfigured mining timeframe for a standard block in dimension y to a modified or extended timeframe for a delayed block in dimension x.

Further, according to a preferred embodiment, the one or more open incidence comprises an erroneously handled data element, a misrouted call or video stream, a financial data element, a health data element and/or any type of transaction which is introduced by different nodes.

According to yet another preferred embodiment, the time period k is between 10 and 600 seconds, preferably between 60 and 300 seconds, and most preferably about 120 seconds. In such a dimension change it could be that, for example, the mining timeframe changes from 10 seconds to 600 seconds. As long as the 600 seconds concern the mining of the current block, there are no new blocks populated in the chain, and thus the chain is kept short.

According to another preferred embodiment, the correlation is made based on a comparison of position data, of background noise or ambient noise, of video/image data, of keyword analysis, of incident number, of incident type and/or of antenna allocation in a specific cellular network at a specific period of time.

According to still another preferred embodiment, the miner starts the mining process with a small delay of λ of about 1 to 30 seconds, preferably 5 to 15 seconds, and most preferably about 10 seconds.

Further, according to a preferred embodiment, the time period k comprises a first time period extending from the first receipt of an open incident in the second or any further node in the blockchain-encompassing network to the start of the calculation of a delay in the mining dimension of the delayed block, and a second time period δ that is preconfigurable. The newly calculated timeframe may be different, depending on the scenario and the different conditions taking also into account the incident factors. For example, in a massive incident where calls are expected to be misrouted and thus the distribution of open incidents in the chain will be far bigger compared to the case of a single traffic stop for a car/civilian check by a police officer. In each of these cases the timeframe alteration should be done respectively.

According to yet another preferred embodiment, the time period δ, is set by the first node based on the number of other nodes hosted in the same network architecture and/or the time period δ, is set by the first node based on the type of incident.

According to yet another preferred embodiment, the blockchain is based on a consensus model of Proof of Authority, PoA. To exemplify the above-mentioned, in an architecture where the different mining nodes are comprised by PSAP and/or ESRP elements are assumed. In this type of architecture, the consensus model that would be a better fit is Proof of Authority (PoA)-based. This is because in such an architecture there is no meaning for a mining competition between the nodes to earn a reward, like for example in cryptocurrency-cases where the consensus model is the Proof of Work (Plow). The point is the emergency architecture would be to incorporate the blockchain in a way that it does not just mimic the function of a database. In this respect, the PoA model allows the different nodes (in case of an emergency architecture, ESRPs and PSAPs) to add transactions in the chain which are relevant to the emergency incidents they handle. So, the PoA model gives a specific timeframe for each one of the nodes in order to add the relevant transactions in a block. However, this timeframe is not permanently fixed but is configurable and can be adjusted based on the needs of the architecture. Say for example that the normal timeframe for mining for each node in the PoA model is set to 10 secs.

According to the invention, a system for multidimensional Blockchain mining is provided, wherein the system is configured to perform the method according to any of the claims 1 to 11. According to a preferred embodiment, the system comprises a blockchain-encompassing network, one or more ESRP, one or more PSAP, one or more Session Border Controller, SBC, one or more Border Control Function, BCF, one or more server and /or one or more media server.

According to yet another aspect of the present invention, a program element is provided, which, when being executed by a processor, is adapted to carry out anyone of the steps of the method for multidimensional Blockchain mining.

According to another aspect of the present invention, a computer-readable medium comprising program code is provided, which, when being executed by a processor, is adapted to carry out anyone of the steps of the method for multidimensional Blockchain mining.

It has also to be noted that aspects of the invention have been described with reference to different subject-matters. In particular, some aspects or embodiments have been described with reference to apparatus type claims, whereas other aspects have been described with reference to method type claims. However, a person skilled in the art will gather from the above and the following description that, unless otherwise notified, in addition to any combination between features belonging to one type of subject-matter, also any combination between features relating to different types of subject-matters is considered to be disclosed with this text. In particular, combinations between features relating to the apparatus type claims and features relating to the method type claims are considered to be disclosed. The invention and embodiments thereof will be described below in further detail in connection with the drawing(s).
- Fig. 1: shows a schematic illustration of a flow chart of delaying block creation and finding correlated calls according to an embodiment of the invention;
- Fig. 2: shows a schematic illustration of a flowchart focusing on the aspect of using the delayed block as a routing relay according to another embodiment of the invention;
- Fig. 3: shows a schematic illustration of a flowchart focusing on the aspect of editing the blockchain according to another embodiment of the invention.

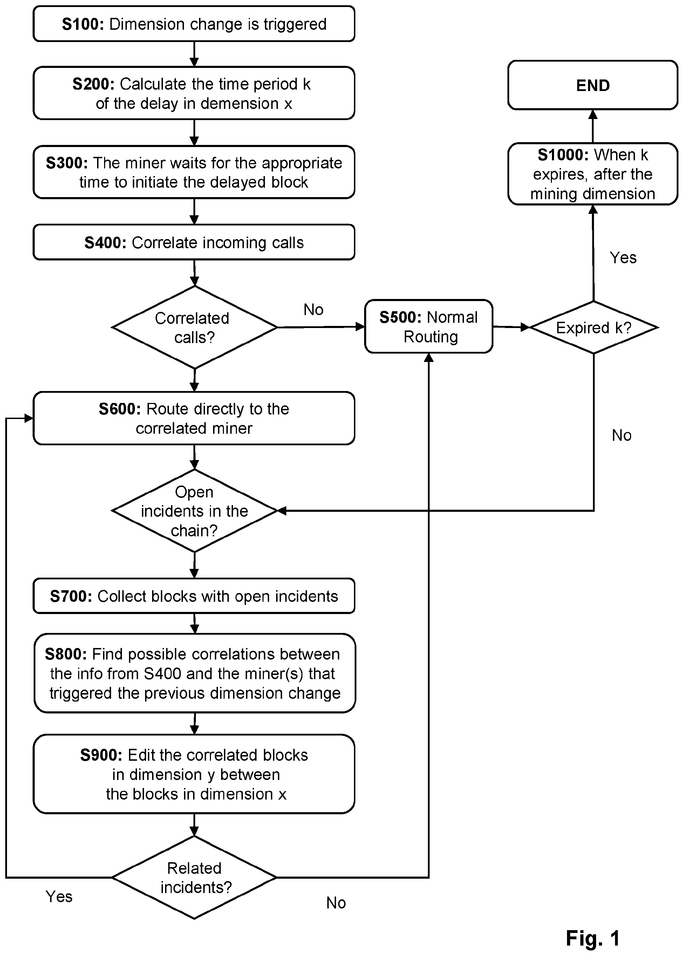

Fig. 1 schematically shows in a schematic illustration a flow chart of delaying block creation (mining) and finding correlated calls according to an embodiment of the invention. This embodiment aims at the change in the dimensions of blocks (mining timeframe) of a blockchain which is used in an emergency architecture. For the sake of the invention, a dimension change is to be understood in such a way that the time intended to create (mine) a block is changed by a trigger. In order to better distinguish the dimensions from one another, the invention also uses dimension y for a predetermined "normal" or usual mining timeframe of a block, whereas a delayed block with a modified or extended timeframe is described by dimension x. Such a dimensions change in blocks of the chain can be triggered from various circumstances and is used to feed similar data into the same block of a specific incident to allow faster date entry and searching. Figure 1 depicts a main flow chart of this idea. As can be seen from this chart, a decision is made for dimensional change and for delay of the mining process by a node of the network (miner) due to the detection of a trigger event. In this scenario, this decision to change the dimension of a block in the block chain is made by an Emergence Service Routing Proxy (ESRP) in step S100, however it is not limited to the ESRP, since other nodes (e.g. PSAPs) can fulfill the role as the miner as well, which, however depends on the underlying emergency or network architecture. In this case, the trigger event is the detection of an open incident block in the blockchain. For this purpose, the ESRP monitors the blockchain to see whether such blocks with open incidents appear in the blockchain, i.e. whether they are mined by a PSAP that is the miner of this block and is published to the other nodes in the blockchain.

In the current case, the ESRP takes control of the mining process of the delayed block from here on, as the ESRP has the greatest possible overview on the block chain in this scenario, i.e. the ESRP monitors the other PSAPs with regard to occurring "open incident" blocks as well as further incoming emergency calls for open incidents. It is therefore advantageous in this scenario if the ESRP acts as miner of the delayed block. In other scenarios, however, it is also conceivable that another node of the network takes on this role. In this case, however, the ESRP calculates the amount of time k needed to delay the block creation into the chain (step S200). In the sense of the invention, at least two categories of block mining timeframes can be distinguished. First, a preconfigured "standard" or usual timeframe to mine blocks into the blockchain with a time value t (in the dimension y) can be considered, second, a delayed timeframe can be considered with a time value T for delaying and editing blocks (in dimension x). Such or a similar definition is helpful for the underlying emergency or network architecture to differentiate between these above-mentioned categories of block mining timeframes. As a result, in step S300 the miner will wait for a time frame equal to k until the delayed block is initiated (e.g. mined).

While the delayed block is prepared for mining, it is likely that different calls are received from the same or other nodes (PSAPs) referring to the same incident. The ESRP, as depicted in step S400, will try to identify such calls. Therefore, the ESPR monitors all other nodes (e.g. PSAPs) in the network upon new incoming calls and tries to match them to the same incident. If nothing (i.e., no correlation) is found, the incoming call will be routed as usual by the standard receiving node (PSAP) in step S500 according to predefined routing rules of the emergency network. On the other hand, if a correlation, within step S600, is noticed, the incoming call is routed to the node (PSAP) handling the correlated incident.

To retrieve a correlated block with an open incident, the ESRP will search the block chain to see if there are any delayed blocks with open incident handled by the same or other nodes (PSAPs), wherein the open incident might be matched to an incoming call. In the sense of the invention, a block comprising an open incident can be marked with a label or can be tagged or flagged with a special tag or flag within the blockchain structure, whereby other methods of labeling known from the state of the art can also be used for such blocks. However, if the result is negative, the method ends (not shown in Figure 1). Otherwise, if the search is positive, the ESRP needs to identify and collect the open incidents which are in the chain (step S700), evaluate their data and check for potential correlation with the newly received call(s) as described in step S800. To achieve this, in step S900 an edit action will get generated for all correlated blocks, by the ESRP. The edit action will show if there are related incidents in the chain. Zero related incidents results in normal routing of the newly received calls (step S500). Finding a hit during related calls analysis means that this call will be routed in step S600, i.e., directly to the miner of the correlated incident.

In the sense of the invention, open incidents are considered those which are handled by a PSAP element erroneously, for example, due to misroutes, but they should have been handled by a different one. That means the PSAP in charge could not find any related incident and thus mines a new block and marks this block with a label "open incident". This block is mined due to a standard preconfigured mining timeframe in dimension y.

Step S500 illustrates the normal or standard call routing according to predefined rules of the emergency network. However, the following steps of the present methodology are continuously carried out as long as the timer (i.e., k) that was set during step S200 is not expired. Non expiration means continue to check for delayed blocks of the incident currently being handled with the correlated new incoming calls. Expiration of k will trigger the end of the block creation delay in the chain (see Step S1000) and hence, the dimension of the mining will be altered to what it was prior to handling the event triggering in the present method.

The delay of the mining was triggered by a specific technical condition, either in a PSAP or in the ESRP elements. By delaying the block, a technical advantage on the amount of search operations that one will have to execute in the blockchain in order to perform a routing action can be created. For example a delay in the block mining process is triggered every time there is an open incident in the chain. This way, the PSAP call takers announce that there is an incident for which there is not enough information for proper event routing. By triggering the delay of mining, potential correlations of the open incident with existing blocks can be identified, and the blocks which are pertinent to the incident can be edited. The delay, which is performed on the block mining, targets the reshaping (editing) process in the blockchain implemented in this solution. By delaying the mining, the number of blocks that is otherwise needed to be edited is limited. Additionally, a chain is obtained that is more solid with regards to its incident/transactional information contents. The technical advantage of this action is depicted in the search operations performed over the optimized chain once it is edited. The above changes result in lower usage of emergency server resources giving the opportunity to handle more calls with the same number of resources.

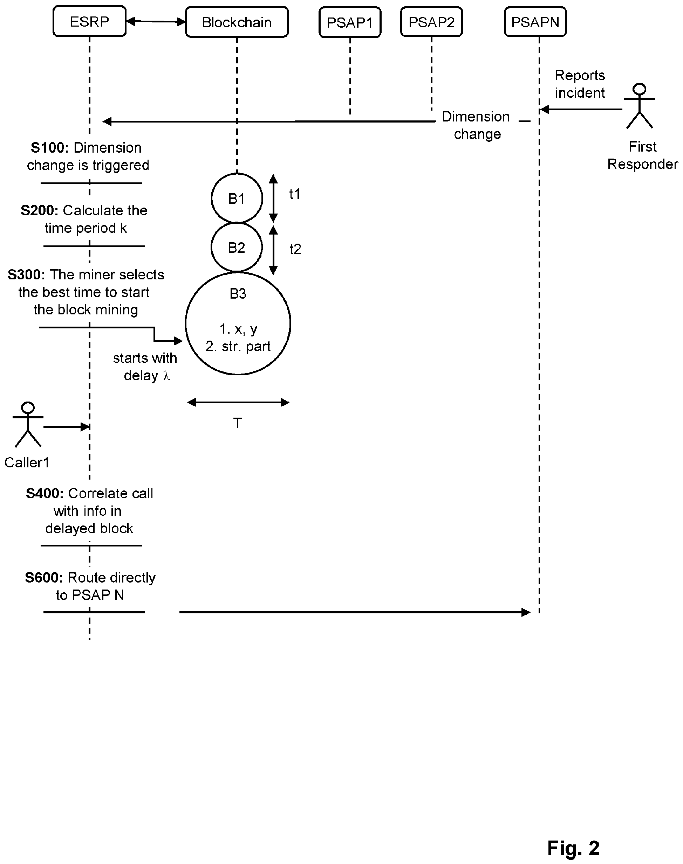

Fig. 2 focuses on the aspect of using the delayed block as a routing relay. The technical advantage of a delay in the mining process in dimension x is given by the fact that the incoming requests to correlate information will be done only with the information included in the delayed block. This is because the information is being condensed in as less blocks as possible. In contrast, if the mining process was done as usual, by populating blocks in dimension y, this would infer that a request of searching specific information in the list converges always to the complexity of a linear search O(N). For example, there may be two different calls for an incident (Incident A) that would need to be captured/stored in block 1 and block 1000 accordingly, using the traditional approach to mine in dimension y. This would entail in a linear search operation from block 1 to block 1000, which scales proportionally to the number of elements/blocks. If, for example, there are 10000 items, then the complexity increases linearly based on the big O notation. Big O notation is a mathematical notation that describes the limiting behavior of a function when the argument tends towards a particular value or infinity. Big O is a member of a family of notations invented by the German mathematicians Paul Bachmann, Edmund Landau and others, collectively called Bachmann-Landau notation or asymptotic notation. The letter O was chosen by Bachmann to stand for "Ordnung", meaning the order of approximation.

Thus, the delayed block is used
a) as a means to find the most appropriate pieces of data related to the incoming calls, by eliminating the search only in a single block, i.e., the critical-delayed block;
b) with the aim to keep the size of the chain limited.

This has the advantage that, as long as incoming calls are entering the emergency network (e.g. ESINET) during the timeframe T and a correlation is found, the delayed block will include condensed information regarding emergency incidents. That is, the delayed blocks will contain a snapshot summary of the events which were expected to trigger an increased number of calls, like for example massive events, such as a big explosion, major highway accident, earthquake etc.

To exemplify the above-mentioned technical benefits, a scenario with a stable caller is considered. A stable caller in the sense of the invention is a caller which does not alter his position, in particular, which does not move from one geolocation to another. In this case, it is assumed that the dimension change is triggered by PSAPN due to a traffic stop from a first responder. In this example, PSAPN sends a message to ESRP to request a dimension change. In step S100 the dimension change is executed by the ESRP. Moving to the next step of this flow, the ESRP will use the available data to identify the exact time period of the delayed block. In this case, the timeframe T will be equal to the timer of the first responder plus a configurable timeslot equal to δ, which is set by the ESRP based on the number of other PSAP elements hosted in the same architecture. The reason for having δ is to draw a realistic relation between the actual timeframe of an emergency incident and the potential that a bystander could report the incident a few seconds or minutes later.

In step S300 the miner (in this case the ESRP) starts the mining process of delayed block B3 with a small delay of λ with the aim to delay the mining process even more. The abbreviations in Fig. 2, "1. x,y" and "2. str." show examples of the information stored in the block, where x, y are coordinates of geolocalisation data and str means that this data is available in string format.

After that, the First Responder is wounded by someone nearby and Caller 1 tries to notify the emergency service. In step S400, the ESRP tries to correlate the location of the incoming call with the location of the incident(s) included in the delayed block. A correlation is found based on the coordinates of Caller 1 and the call is routed directly to PSAPN element.

As an alternative case, the stream of Caller 1 could be compared to the stream delivered by the first responder in order to try and match the two incidents. In any case, in the context of the invention at hand, the correlation part is only a typical similarity function of any type of input data. The important part is that a delay of the mining process is given with the aim to create an efficient routing mechanism in case the matching information is accurate.

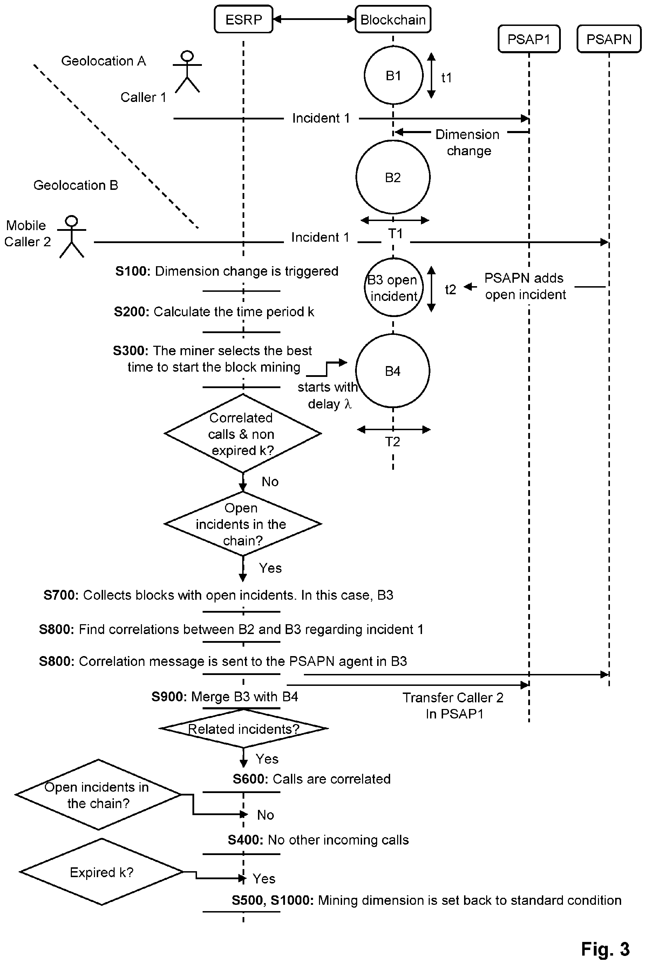

Fig. 3 highlights the technical advantage of the present invention with respect to the aspect of editing the blockchain. The technical effect of delaying the block mining, and thus altering the mining dimension, is concentrated on the aspect of editing a limited number of blocks compared to the case where one should traverse a long chain, find the relevant blocks, and perform the edit action. The latter action is triggered in the current embodiment by the ESRP element. In this embodiment, block B2 corresponds to the delayed block that is already in the chain from a scenario/emergency incident that was ongoing earlier, say the one from Fig. 2.

In this case, it is assumed that a match was not found for the mobile Caller 2 in block B2, so based on the present invention the routing process have been followed normally and thus the relevant call was answered by PSAPN. This is because Caller 2 was located in Geolocation A, but called after timeframe T1 has expired because Caller 2 moved in a different Geolocation B.

PSAPN handled Caller 2, but it is not possible to identify where the call should be routed, basing its decision only on the description of the caller. In this case, PSAPN creates block B3 in the blockchain with the label "open incident", and this block is mined in dimension y with a predetermined timeframe of t2. Note here that the predetermined timeframe of t2 is equal to the predetermined timeframe t1 of block B1, since it was initially set by the underlying network system to mine a usual block.

Based on the invention, the ESRP element comprises a functionality that monitors the blocks for "open incident" labels. Open incidents are considered those which are handled by a PSAP element erroneously, for example, due to misroutes, but they should have been handled by a different one. In this case, of course the PSAPN element in charge will identify at the end the way to route the call to the correct PSAP, but the technical aspect here is to accelerate the procedure by using the blockchain architecture. This means in this case a call has already reached PSAPN element, then an agent of PSAPN takes the decision where the call should be routed, usually after discussing with the caller. In this case the call should be transferred in a different PSAP element, through the ESRP, but the decision has to be taken by the agent.

In step S100 a dimension change is initiated by the ESRP upon detection of a block with a label "open incident" (e.g. block B3). In step S200 a time period k is calculated by the ESRP, taking into account the time difference of the calls between Caller 1 and Caller 2. In this sense, the timeframe T2 is based on the fact that the first mobile Caller called with delay, thus any other calls that may arrive for this incident will be based on a similar delay plus a configurable period δ.

In the same way as depicted in Fig. 2, the ESRP element picks the best time to initiate the mining of the delayed block, e.g., after additional λ seconds.

There are no other correlated calls at the moment, so the method is directed to the step of identifying if there are open incidents in the chain.

In step S700 the ESRP collects the blocks which are labeled with an "open incident" label. In this example, the open incident labeled block is B3. In step S800 the ESRP tries to identify the correlation between block B3 and the information, which is included in block B2, i.e., the previous delayed block.

In essence, this is the technical aspect in this embodiment that is to be highlighted. The possibility to correlate calls that have been received in the emergency architecture (e.g. ESINET) after timeframe T1 was expired. There is no direct information like the location of Caller 2 (x, y coordinates) or the stream that can be correlated.

In this case, the proposed method uses an indirect way to identify the origin of Caller 2. The time in that Caller 2 had called to report incident 1, was after incident 1 took place because as it was hypothesized that Caller 2 is a mobile caller. The emergency service will send a request to a mobile phone provider r to retrieve the data of Caller 2 and Caller 1 with regards to their location at the time of the incident 1. If both of them are registered in the same antenna at the time the event took place, being in a close distance to Caller 1, it can then be inferred that a correlation is found. If there is a number of alternative options of incidents, the proposed method will follow a sequential selection based on the distance between Caller 2 and the relevant incidents, at the time of the call correlation with Caller 1.

As it is known from prior art, each antenna sector is mapped on a specific PSAP element. Thus, the only way that Caller 2 can be routed in a different PSAP element, say PSAPN, and report an incident for a different PSAP, say PSAP1, would be that Caller 2 was located in the relevant antenna sector that routes to the PSAP of interest, at the time the incident1 took place in this geolocation.

Based on the above-mentioned scenario, a correlation is found and a message is sent to the call taker in the PSAPN who has added the open incident labeled block B3. In this case, block B3 is merged with delayed block B4. A relevant correlation is created between delayed block B2 and delayed block B4 to depict the incident1 correlation. In a different case, if there are not too many blocks between B2 and B4, it could be possible to merge B2, B3, B4. This depends on the number of the blocks that one wants to edit and the relevant operations that should be applied in the block chain.

In any case, the technical result of delaying the mining of block B4 and thus achieving a merge in the blockchain between B2 and B4 results in a limited number of blocks and is thus considered as a technical advantage. This is because a shorter chain is created, more condensed with regards to the information residing in the blocks and their context. This means that the search operations in the chain are improved after applying the proposed method. With the delay of the mining process, thus the number of blocks is reduced that should or can be edited/merged above the current block.

It should be noted that the term "comprise(s)" or "comprising" does not exclude other elements or steps and the "a" or "an" does not exclude a plurality. Further, elements described in association with different embodiments may be combined.

It should also be noted that reference signs in the claims shall not be construed as limiting the scope of the claims.

### Reference numerals

- ESRP: Emergency Service Routing Proxy
- PSAP: Public Safety Answering Point
- PSAPN: Public Safety Answering Point N
- PSAP1: Public Safety Answering Point 1
- Caller 1: Emergency call dialer 1
- Caller 2: Emergency call dialer 2
- Incident1: Incident with index number 1
- B1 -B4: blocks 1 to 4 of a blockchain
- t1, t2: predetermined mining timeframes 1 respectively 2 in dimension y
- T1, T2: calculated mining timeframes 1 respectively 2 in dimension x
- δ: Weighting factor that takes into account the sum of existing nodes in the network
- λ: additional time period
- k: calculated time period
- S100 - S1000: steps of the method

## Claims

1. A method for multidimensional blockchain mining, wherein the method comprises the steps of:
- S100 deciding, by a first node, in a blockchain-comprising network, to change a mining dimension of a block which is to be mined, thus delaying the block, upon detecting a trigger event from a second or any further node in the blockchain-comprising network;
- S200 calculating, by the first node, a time period k for a delay in the mining dimension of the delayed block;
- S300 initiating, by the first node, a timer with the calculated time period k to mine the delayed block;
- S400 correlating, by the first node, one or more new incoming call with one or more incident already present in the delayed block;
- S500 routing, by the first node, the one or more new incoming call to one of the second or any further node according to predefined standard routing rules, in case no correlation with one or more call already present in the delayed block is made;
- S600 routing, by the first node, the one or more new incoming call to one of the second or any further node which is responsible for one or more call already present in the delayed block, in case one or more correlation with one or more call already present in the delayed block is made,
- S700 collecting, by the first node, one or more previous block of the blockchain which comprises one or more open incidence;
- S800 correlating, by the first node, the one or more new incoming call to the one or more previous block of the blockchain which comprises one or more open incidence;
- S900 editing, by the first node, the delayed block and/or the one or more previous block of the blockchain, in case one or more correlation between the one or more new incoming call and one or more open incident is made, and routing, by the first node, the one or more new incoming call to the node which is responsible for the one or more correlating open incident.

2. The method according to claim 1, wherein the first node is an Emergency Service Routing Proxy, ESRP, a Public Safety Answering Point, PSAP, a Session Border Controller, SBC, a Border Control Function, BCF, a server and /or a media server; wherein the second or any further node is an ESRP, PSAP, a Session Border Controller, SBC, a Border Control Function, BCF, a server and/or a media server; wherein the block chain-comprising network is an emergency network, an Emergency Services IP Network, ESlnet, a financial network, a security network and/or a governmental network.

3. The method according to any one of the preceding claims, wherein the trigger event comprises a labeled data element, an open incident, a labeled or tagged call, a financial data transaction, a health data transaction and/or any type of transaction which is introduced by different nodes.

4. The method according to any one of the preceding claims, wherein the change of the mining dimension further comprises the change from a standard preconfigured mining timeframe for a standard block in dimension y to a modified or extended timeframe for a delayed block in dimension x.

5. The method according to any one of the preceding claims, wherein the one or more open incidence comprises an erroneously handled data element, a misrouted call or video stream, a financial data element, a health data element and/or any type of transaction which is introduced by different nodes.

6. The method according to any one of the preceding claims, wherein the time period k is between 10 and 600 seconds, preferably between 60 and 300 seconds, and most preferably about 120 seconds.

7. The method according to any one of the preceding claims, wherein the correlation is made based on a comparison of position data, of background noise or ambient noise, of video/image data, of keyword analysis, of incident number, of incident type and/or of antenna allocation in a specific cellular network at a specific period of time.

8. The method according to any one of the preceding claims, wherein the miner starts the mining process with a small delay of λ of about 1 to 30 seconds, preferably 5 to 15 seconds, and most preferably about 10 seconds.

9. The method according to any one of the preceding claims, wherein the time period k comprises a first time period extending from the first receipt of an open incident in the second or any further node in the blockchain-encompassing network to the start of the calculation of a delay in the mining dimension of the delayed block, and a second time period δ that is preconfigurable.

10. The method according to any one of the preceding claims, wherein the time period δ is set by the first node based on the number of other nodes hosted in the same network architecture and/or the time period δ is set by the first node based on the type of incident.

11. The method according to any one of the preceding claims, wherein the blockchain is based on a consensus model of Proof of Authority, PoA.

12. A system for multidimensional Blockchain mining, wherein the system is configured to perform the method according to any of the claims 1 to 11.

13. The system for multidimensional Blockchain mining, wherein the system comprises a blockchain-encompassing network, one or more ESRP, one or more PSAP, one or more Session Border Controller, SBC, one or more Border Control Function, BCF, one or more server and /or one or more media server.

14. A program element, which, when being executed by a processor, is adapted to carry out steps of the method for multidimensional blockchain mining according to anyone of the claims 1 to 11.

15. A computer-readable medium comprising program code, which, when being executed by a processor, is adapted to carry out anyone of the steps of the method for multidimensional blockchain mining according to any of the claims 1 to 11.
